(19) Europäisches Patentamt
European Patent Office
Office européen des brevets

(11) **EP 3 896 965 B1**

## (12) EUROPEAN PATENT SPECIFICATION

(45) Date of publication and mention
of the grant of the patent:
**01.10.2025 Bulletin 2025/40**

(21) Application number: **18943329.5**

(22) Date of filing: **12.12.2018**

(51) International Patent Classification (IPC):
*H04N 19/154* (2014.01)     *G06T 1/20* (2006.01)
*G06T 9/00* (2006.01)

(52) Cooperative Patent Classification (CPC):
**G06T 1/20; G06T 9/002; H04N 19/154**

(86) International application number:
**PCT/CN2018/120749**

(87) International publication number:
**WO 2020/118588 (18.06.2020 Gazette 2020/25)**

(54) **METHOD, DEVICE AND APPARATUS FOR PREDICTING PICTURE-WISE JND THRESHOLD, AND STORAGE MEDIUM**

VERFAHREN, VORRICHTUNG UND GERÄT ZUR VORHERSAGE DER BILDWEISEN JND-SCHWELLE UND SPEICHERMEDIUM

PROCÉDÉ, DISPOSITIF ET APPAREIL POUR PRÉDIRE UN SEUIL JND PAR IMAGES, ET SUPPORT DE STOCKAGE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**20.10.2021 Bulletin 2021/42**

(73) Proprietor: **Shenzhen Institutes of Advanced Technology Chinese Academy of Sciences**
**Shenzhen, Guangdong 518055 (CN)**

(72) Inventors:
• **ZHANG, Yun**
**Shenzhen, Guangdong 518055 (CN)**
• **LIU, Huanhua**
**Shenzhen, Guangdong 518055 (CN)**

(74) Representative: **Plavsa, Olga**
**Plavsa & Plavsa**
**Patentna kancelarija**
**Strumicka 51**
**11050 Beograd (RS)**

• **ZHANG XINFENG ET AL: "Just-Noticeable Difference-Based Perceptual Optimization for JPEG Compression", IEEE SIGNAL PROCESSING LETTERS, vol. 24, no. 1, 1 January 2017 (2017-01-01), pages 96 - 100, XP055857608**
• **KI SEHWAN ET AL: "Learning-Based Just-Noticeable-Quantization- Distortion Modeling for Perceptual Video Coding", vol. 27, no. 7, 1 July 2018 (2018-07-01), USA, pages 3178 - 3193, XP055804367, Retrieved from the Internet <URL:https://ieeexplore.ieee.org/stampPDF/ getPDF.jsp?tp=&arnumber=8325305& ref=aHR0cHM6Ly9pZWVleHBsb3JlLmllZ WUub3JnL2RvY3VtZW50LzgzMjUzMDU=>**
• **SEBASTIAN BOSSE ET AL: "Deep Neural Networks for No-Reference and Full-Reference Image Quality Assessment", ARXIV.ORG, CORNELL UNIVERSITY LIBRARY, 6 December 2016 (2016-12-06), XP080737072**
• **"Comprehensive Dictionary of Electrical Engineering - 2nd ed.", 1 January 2005, TAYLOR & FRANCIS, article LAPLANTE PHILLIP A: "Treshold", pages: 690 - 692, XP055857614**

(56) References cited:
CN-A- 103 002 280    CN-A- 103 096 079
CN-A- 103 501 441    US-A- 6 075 884
US-A1- 2013 256 671

EP 3 896 965 B1

**Description**

Field of the invention

The invention relates to the prediction method, device, equipment, and storage medium for the image-level JND threshold, which belongs to the technical field of image/video compression.

Background technology

It is found from previous studies that the human visual system's perception of visual information is a non-uniform and nonlinear information processing process in which there is certain visual psychology redundancy when observing images with human eyes, thus selectively ignoring or shielding some features or contents in the images. Based on various shielding characteristics of the human visual system, human eyes cannot perceive subtle changes in the image pixels below a certain threshold, namely, imperceptible changes for human eyes. This threshold refers to human eyes' Just Noticeable Distortion (JND) threshold that represents visual redundancy in the image. JND Threshold describes the minimum image distortion perceived by human eyes and reflects the human visual system's perception and sensitivity. Therefore, the JND threshold has been widely used for image/video processing, such as image/video encoding, streaming application, and watermarking technique.

At present, multiple JND models have been proposed, which are generally divided into two categories: pixel domain-based JND models and frequency domain-based JND models. Pixel domain-based JND models mainly take into account the influence of adaptive illumination effect and spatial masking effect on JND threshold. For instance, Wu et al. adopted the regularity of spatial structure to measure spatial masking effect and proposed a new JND model to enhance the accuracy of estimating the JND threshold of irregular texture regions in 2012 in combination with the adaptive illumination effect; Wu et al. believed that the presence of a disordered concealing effect would lead to higher JND threshold of disordered regions than that of effective regions, so they put forward a JND model based on Free Energy Principle in 2013; Meanwhile, by taking advantage of adaptive illumination effect and structured uncertainty, Wu et al. proposed a function of pattern masking effect in 2013 and further put forward a JND model on the basis of pattern masking effect; in 2016, Wang et al. established a JND model for screen image rebuilt based on the edge contour, which decomposed the calculations of edge contour-based JND threshold into independent estimations of adaptive illumination and masking effects and structured masking effect; Hadizadeh et al. incorporated factors like visual attention mechanism to propose a JND model. Frequency domain-based JND models mainly consider Contrast Sensitivity Function (CSF), Contrast Masking Effect, Adaptive Illumination Effect, and Fovea Centralis Retinae Masking Effect. For example, In the temporal and spatial CSF-based JND model introduced by Z.Wei et al. in 2009, gamma coefficient was introduced to compensate illumination effect; Bae et al. took into account the influence of different frequencies on adaptive illumination, and thus proposed a new adaptive illumination-based JND model; By means of computational complexity theory, H. Ko et al. calculated contrast masking effect, and established a JND model in 2014 that could adapt to the core of Discrete Cosine Transform (DCT) of any size; Ki et al. considered the impact of quantification-induced energy losses on JND threshold during the compression process, and hence put forward a learning-based JND predicting method in 2018.

Currently, pixel domain-based JND models are used to calculate a JND threshold for each image pixel, while frequency domain-based JND models can be adopted to first convert the image's pixel domain into its frequency domain and then calculate a JND threshold for each sub-frequency. Thus, it can be seen that both pixel domain-based and frequency domain-based JND models are local JND threshold estimation models which just estimate the JND threshold of a single pixel or frequency. However, the quality of the entire image is determined by some key regions and poor regions, so it is difficult for the above two kinds of JND models to accurately estimate human eyes' JND threshold for the entire image; moreover, traditional JND models mainly took into account the estimations of JND thresholds of raw images but failed to estimate the JND thresholds of the image of any quality level. Since the images or videos received by the image or video processing systems in real life are mostly distorted ones, the practical application of traditional JND models is subject to restrictions. As such, it is of great significance to predict the JND threshold for the image of any quality level.

Summary of the invention

The invention is set out in the appended set of claims.

In this invention, perceptual distortion discrimination is conducted on the raw image and on the compressed images in the compressed image set of the said image through trained multi-class perceptual distortion discriminator to obtain the set of perceptual distortion discrimination results, and preset image-level JND search strategies are adopted for fault tolerance of the said set of perceptual distortion discrimination results to predict the image-level JND threshold of the said image, thus reducing the prediction deviation of the image-level JND threshold, improving the prediction accuracy of the image-level JND threshold, and bringing the predicted JND threshold closer to the human visual system's perception of the quality of the entire image.

Brief description of figures

Fig. 1 gives the flow chart on how the prediction method for the image-level JND threshold is effectuated as hereunder provided by Embodiment I of the invention;

Fig. 2 gives the flow chart on how perceptual distortion discrimination is effectuated on the raw image and compressed images as hereunder provided by Embodiment II of the invention;

Fig. 3 gives the flow chart on how fault tolerance is effectuated on the set of perceptual distortion discrimination results as hereunder provided by Embodiment III of the invention;

Fig. 4 shows a schematic view of the sliding window as hereinbefore provided by Embodiment III of the invention;

Fig. 5 shows a schematic view of the prediction device for the image-level JND threshold as hereunder provided by Embodiment IV of the invention;

Fig. 6 shows a schematic view of the prediction device for the image-level JND threshold as hereunder provided by Embodiment V of the invention; and

Fig. 7 shows a schematic view of the computing device as hereunder provided by Embodiment VI of the invention.

Detailed description of the invention

In order to present the objects, technical solutions, and advantages of the invention in a clearer way, the invention is further detailed in combination with the appended figures and embodiments below. It should be understood that specific embodiments described herein just serve the purpose of explaining the invention instead of imposing restrictions on it.

In the following part, specific embodiments are presented for a more detailed description of the invention:

**Embodiment I:**

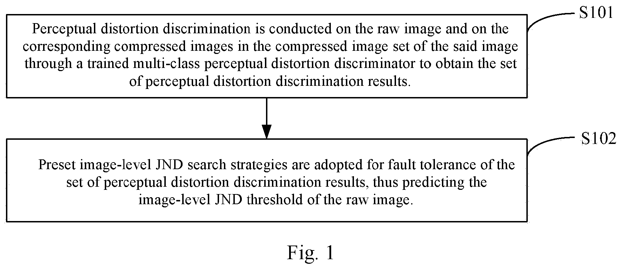

Fig. 1 gives the flow chart on how the prediction method for the image-level JND threshold is effectuated as provided by Embodiment I of the invention. For clarification, only some processes regarding this embodiment of the invention are displayed, as detailed below:
In S101, perceptual distortion discrimination is conducted on the raw image and on the corresponding compressed images in the compressed image set of the said image through a trained multi-class perceptual distortion discriminator to obtain the set of perceptual distortion discrimination results.

This embodiment of the invention applies to image/video processing platforms, systems, or devices, such as personal computers and servers. In this embodiment of the invention, the raw image is compressed through different compression ways to obtain compressed images of different quality levels, and all compressed images of different quality levels form a compressed image set. By entering the raw image $x$ and the $i^{th}$ compressed image $x_i$ in the compressed image set of the said image $x$ into the trained multi-class perceptual distortion discriminator, perceptual distortion discrimination is effectuated on the raw image $x$ and the $i^{th}$ compressed image $x_i$ through the trained multi-class perceptual distortion discriminator to get perceptual distortion discrimination results, and all these results form a set of perceptual distortion discrimination results, wherein perceptual distortion discrimination results comprise true values (such as 1) and false values (such as 0).

Before implementing perceptual distortion discrimination on the raw image and on the corresponding compressed image in the compressed image set of the raw image through the trained multi-class perceptual distortion discriminator, preferably, a multi-class perceptual distortion discriminator is constructed, and supervised, half-supervised or unsupervised image training samples are adopted for training the multi-class perceptual distortion discriminator, thus making it possible for the multi-class perceptual distortion discriminator to distinguish between two images of the same content but with different quality levels about whether there is any perceptual distortion.

While training the trained multi-class perceptual distortion discriminator, preferably, a binary perceptual quality discriminator is constructed by means of Convolutional Neural Network, Linear Regression Function, and Logistic Regression Function, so a multi-class perceptual distortion discriminator is built based on this binary perceptual quality discriminator; the learning is conducted on this binary perceptual quality discriminator in accordance with pre-generated training image samples; the first parameter set of Convolutional Neural Network, the second parameter set of Linear Regression Function and the third parameter set of Logistic Regression Function are adjusted based on the sample labels of training image samples, so as to make use of the learned binary perceptual quality discriminator, and realize the perceptual distortion discrimination between the raw image and the corresponding compressed image in the compressed image set of the raw image, thus decomposing the training of the multi-class perceptual distortion discriminator into the training of the binary perceptual quality discriminator and improving the training speed and efficiency of the discriminator model.

While the learning is conducted on the binary perceptual quality discriminator based on pre-generated training image samples, preferably, the learning of the binary perceptual quality discriminator is achieved through the following steps:

1) A predetermined number (such as 50) of training image samples are generated from MCL_JCI Dataset, and the training image samples comprise positive and negative image samples, marked as $\{x_t, y_t\}$, wherein $x_t$ is the sample image data, $x_t$ consists of raw image sample and its corresponding compressed image sample set, and $y_t$ is the sample label of the sample image data;

2) The raw image sample $x$ and the $i$th compressed image sample $x_i$ in the compressed image sample set of the said raw image sample are respectively divided into image blocks with a size of $M \times M$, and the $j$th image blocks of $x$ and $x_i$ are respectively marked as $P_{x,j}$ and $P_{xi,j}$, wherein $j \in [1,2....S/M]$, S is the size of the raw image sample $x$, and the image blocks of raw image samples and compressed image samples are arranged in the same sequence;

3) N image blocks at the same positions are chosen from the blocks divided by $x$ and $x_i$, respectively, marked as raw sample image block set $\{P_{x,1}, P_{x,2},...,P_{x,N}\}$ and compressed sample image block set $\{P_{xi,1}, P_{xi,2},...,P_{xi,N}\}$;

4) Convolutional Neural Network (CNN) is adopted for feature extraction of raw sample image blocks and compressed sample image blocks in $\{P_{x,1}, P_{x,2},...,P_{x,N}\}$ and $\{P_{xi,1}, P_{xi,2},...,P_{xi,N}\}$ respectively, to obtain corresponding raw sample image block feature set and compressed sample image block feature set, marked as $\{F_{x,1}, F_{x,2},...,F_{x,N}\}$ and $\{F_{xi,1}, F_{xi,2},...,F_{xi,N}\}$;

5) Feature fusion is implemented on the $l$th raw sample image block feature $F_{x,l}$ and its corresponding compressed sample image block feature $F_{xi,l}$ in $\{F_{x,1}, F_{x,2},...,F_{x,N}\}$ and $\{F_{xi,1}, F_{xi,2},...,F_{xi,N}\}$ through the feature fusion ways $\{F_{x,j}, F_{xi,j}\}$, $\{F_{x,j}, F_{xi,j}\}$ or $\{F_{x,j}, F_{xi,j}, F_{x,j} - F_{xi,j}\}$, respectively, thus obtaining sample fused feature set $\{F'_1, F'_2,...,F'_N\}$;

6) Based on the sample fused feature set $\{F'_1, F'_2,...,F'_N\}$, Linear Regression Function is adopted for scoring the quality of every compressed sample image block in $\{P_{xi,1}, P_{xi,2},...,P_{xi,N}\}$ and obtaining the corresponding sample quality score set $\{S_1,S_2,...,S_N\}$;

7) The value mapped from $\{S_1,S_2,...,S_N\}$ to 0 or 1 through Logistic Regression Function is marked as r: when r≥0.5, it is considered that there is a perceptual distortion between the compared image sample $x_i$ and the raw image sample $x$, thus obtaining perceptual distortion discrimination results and judging whether these perceptual distortion discrimination results are consistent with corresponding sample labels. If not consistent, the first parameter set of Convolutional Neural Network, the second parameter set of Linear Regression Function and the third parameter set of Logistic Regression Function are adjusted, and we skip to Step 4) to continue with the learning of the binary perceptual quality discriminator until perceptual distortion discrimination results are consistent with corresponding sample labels or the learning times reach the preset iterative threshold.

In this embodiment of the invention, the training of multi-class perceptual distortion discriminator is converted into the training of binary perceptual quality discriminator based on Steps 1)-7), thus improving the training speed and efficiency of multi-class perceptual distortion discriminator and lowering the difficulty in predicting subsequent image-level JND thresholds.

Before the learning of the binary perceptual quality discriminator based on the pre-generated training image samples, preferably, the learning efficiency is initialized into $1 \times 10^{-4}$, and Adam Algorithm is adopted as the gradient descent method; also, the mini-batch gradient descent is set as 4 to process one mini-batch; then, the first parameter set, the second parameter set, and the third parameter set are updated to improve the training speed and efficiency of multi-class perceptual distortion discriminator.

In S102, preset image-level JND search strategies are adopted for fault tolerance of the set of perceptual distortion discrimination results, thus predicting the image-level JND threshold of the raw image.

In this embodiment of the invention, there may be erroneous perceptual distortion discrimination on the raw image and on the compressed images through the multi-class perceptual distortion discriminator, thus obtaining inaccurate perceptual distortion discrimination results. Therefore, preset image-level JND search strategies are adopted for fault tolerance of the set of perceptual distortion discrimination results to ultimately predict the image-level JND threshold of the said image, thus improving the prediction accuracy of the image-level JND threshold.

In this embodiment of the invention, perceptual distortion discrimination is conducted on the raw image and on the compressed images in the compressed image set of the said image through trained multi-class perceptual distortion discriminator to obtain the set of perceptual distortion discrimination results, and preset image-level JND search strategies are adopted for fault tolerance of the said set of perceptual distortion discrimination results to predict the image-level JND threshold of the said image, thus reducing the prediction deviation of the image-level JND threshold, improving the prediction accuracy of the image-level JND threshold, and bringing the predicted JND threshold closer to the human visual system's perception of the quality of the entire image.

## Embodiment II:

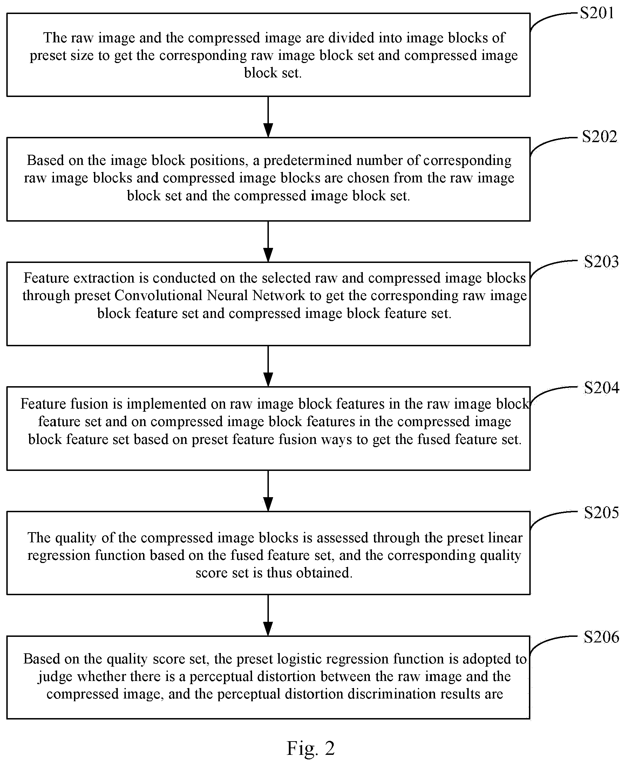

Fig. 2 gives the flow chart on how the perceptual distortion discrimination is effectuated on the raw image and the compressed image in S101 of Embodiment I as provided by Embodiment II of the invention. For clarification, only some processes regarding this embodiment of the invention are displayed, as detailed below:

In S201, the raw image and the compressed image are divided into image blocks of preset size to get the corresponding raw image block set and compressed image block set.

In this embodiment of the invention, the raw image $x$ and the $i$th compressed image $x_i$ of the raw image are divided into image blocks of preset size to get the corresponding raw image block set and compressed image block set, where the raw image blocks and the compressed image blocks are arranged in the same sequence. For example, for the $j$th raw image block $P_{x,j}$ divided by the raw image $x$, the image block divided by the compressed image $x_i$ at the same position with the raw image block $P_{x,j}$ at the raw image $x$ is called $P_{x,j}$, namely, the $j$th compressed image block.

Preferably, the image block size is determined as $32 \times 32$, thus avoiding oversize or undersize image block, which may reduce the efficiency of feature extraction for subsequent image blocks.

In S202, based on the image block positions, a predetermined number of corresponding raw image blocks and compressed image blocks are chosen from the raw image block set and the compressed image block set, respectively.

In this embodiment of the invention, a predetermined number of corresponding raw image blocks and compressed image blocks are randomly selected from the raw image block set and the compressed image block set, respectively, and the selected raw image blocks in the raw image are arranged at the same positions with the selected compressed image blocks in the compressed image.

Preferably, the quantities of the selected raw image blocks and the selected compressed image blocks are both 32, thus avoiding excessive or inadequate image blocks for feature extraction, which may reduce the efficiency of feature extraction for subsequent image blocks.

In S203, feature extraction is conducted on the selected raw image blocks and compressed image blocks through preset Convolutional Neural Network to get the corresponding raw image block feature set and compressed image block feature set.

In this embodiment of the invention, preferably, the Convolutional Neural Network's network structure comprises an activated layer immediately following each convolutional layer and a pooling layer between every two convolutional layers, thus enhancing the distinctiveness of the features extracted from raw image blocks and compressed image blocks.

Further preferably, the Convolutional Neural Network has ten convolutional layers, a convolutional kernel size of 3, and a convolutional step size of 2, thus further enhancing the distinctiveness of the features extracted from raw image blocks and compressed image blocks.

Again, preferably, Rectified linear unit (ReLU) is adopted for the activation function of the Convolutional Neural Network, and the maximum pooling method is adopted for the pooling, thus improving the calculation and convergence speeds of the Convolutional Neural Network.

In S204, feature fusion is implemented on raw image block features in the raw image block feature set and on compressed image block features in the compressed image block feature set based on preset feature fusion ways to get the fused feature set.

In this embodiment of the invention, feature fusion is conducted on the lth raw image block feature $F_{x,l}$ in the raw image block feature set $\{F_{x,1}, F_{x,2}, ..., F_{x,N}\}$ and the corresponding compressed image block feature $F_{x,l}$ in the compressed image block feature set $\{F_{xi,1}, F_{xi,2}, ..., F_{xi,N}\}$ through the feature fusion methods $\{F_{x,j}, F_{xi,j}\}$, $\{F_{x,j} - F_{xi,j}\}$ or $\{F_{x,j}, F_{xi,j}, F_{x,j} - F_{xi,j}\}$, and the fused feature set $\{F'_1, F'_2, ..., F'_N\}$ is thus obtained, wherein N is the number of the selected raw and compressed image blocks.

Preferably, the feature fusion method $\{F_{x,j}, F_{xi,j}, F_{x,j} - F_{xi,j}\}$ is adopted for the fusion of raw image block features and corresponding compressed image block features, thus improving the distinctiveness of features.

In S205, the quality of compressed image blocks is assessed through the preset linear regression function based on the fused feature set, and the corresponding quality score set is thus obtained.

In this embodiment of the invention, the quality of each compressed image block in the compressed image block set is assessed through any linear regression function (such as Support Vector Machine (SVM)) based on the fused feature set, and corresponding quality scores are obtained. For example, the quality score of the $j$th compressed image block $P_{xi,j}$ is marked as $S_j$, and the quality scores of all compressed image blocks form the quality score set, marked as $\{S_1, S_2, ..., S_N\}$.

In this embodiment of the invention, preferably, Multi-layer Perception (MLP) is adopted as the linear regression function, and the number of layers for the Multi-layer Perception is set as 1, thus improving the accuracy of quality scoring.

In S206, based on the quality score set, the preset logistic regression function is adopted to judge whether there is a perceptual distortion between the raw image and the compressed image, and the perceptual distortion discrimination results are obtained.

In this embodiment of the invention, the quality score set $\{S_1, S_2, ..., S_N\}$ for compressed image blocks is obtained. By adopting the logistic regression function $\Psi(\sum_{i=1}^{N} w_i S_i + b)$, the value mapped from $\{S_1, S_2, ..., S_N\}$ to 0 or 1 is marked as r: when r≥0.5, it is believed that there is a perceptual distortion between the compressed image $x_i$ and the raw image $x$, and the true value (1) is outputted; otherwise, it is held that there is no perceptual distortion between $x_i$ and $x$, and the false value (0) is outputted, wherein N is the number of the selected raw and compressed image blocks; $\psi$ (.) is *sig* mod function; $w_i$ is the weight of the $i^{th}$ compressed image block; the weights of all compressed image blocks form the third parameter set of the Logistic Regression Function; $b$ is the offset parameter of the Logistic Regression Function.

In this embodiment of the invention, the raw image and compressed image are firstly divided into image blocks; then, feature extraction and feature fusion are organized for the divided raw and compressed image blocks; finally, the quality of the compressed image block is assessed based on the fused features, and the perceptual distortion discrimination results of the compressed image and raw image are obtained, thus enhancing the accuracy of perceptual distortion discrimination results.

**Embodiment III:**

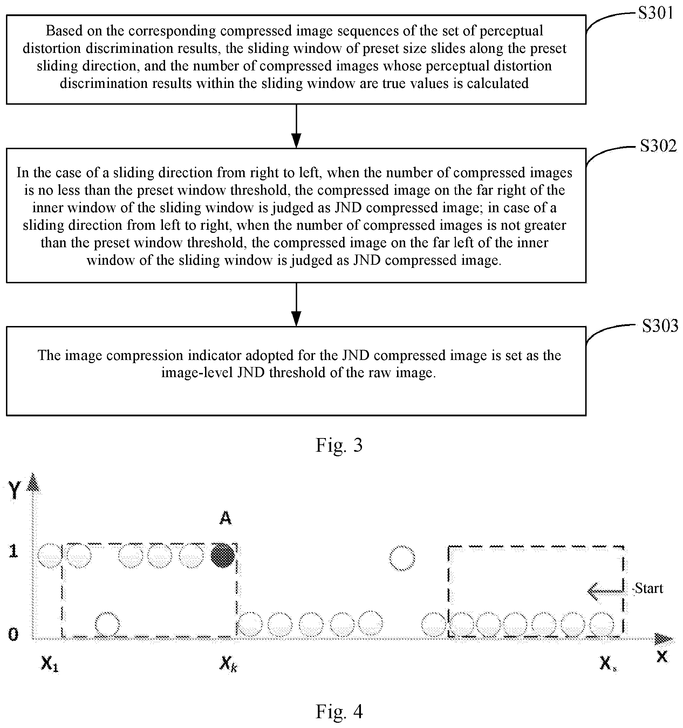

Fig. 3 gives the flow chart on how the fault tolerance is effectuated on the perceptual distortion discrimination results in S102 of Embodiment I as provided by Embodiment III of the invention. For clarification, only some processes regarding this embodiment of the invention are displayed, as detailed below:
In S301, based on the corresponding compressed image sequences of the set of perceptual distortion discrimination results, the sliding window of preset size slides along the preset sliding direction, and the number of compressed images whose perceptual distortion discrimination results within the sliding window are true values is calculated, wherein the sliding director is from right to left or from left to right.

In this embodiment of the invention, each perceptual distortion discrimination result in the perceptual distortion discrimination result set corresponds to a compressed image, and the compressed image sequences $x_1,x_2,...x_N$ corresponding to the perceptual distortion discrimination result set constitute an XY coordinate system together with the perceptual distortion discrimination results, where the compressed image sequences $x_1,x_2,...x_N$ from the coordinates along X-axis; the true value (1) and the false value (0) of perceptual distortion discrimination results form the coordinates along Y-axis; the sliding window of preset size begins to slide from the last compressed image (namely, the Nth compressed image $x_N$) on the right of X-axis in the coordinate system to the origin on the left of the XY coordinate system (namely, sliding along X-axis from right to left), or the sliding window starts to slide from the first compressed image (namely, the 1st compressed image $x_1$) on the X-axis close to the origin of the coordination system to the right along X-axis (namely, sliding along X-axis from left to right); during the sliding process, the number of compressed images whose perceptual distortion discrimination results within the sliding window are true values is calculated, namely, calculating how many compressed images within the sliding window are found with perceptual distortion discrimination results that belong to true values.

As an example, as shown in Fig. 4 where the schematic view of the sliding window sliding along the X-axis from right to left is presented, the compressed image sequences $x_1,x_2,...x_N$ corresponding to the perceptual distortion discrimination result set constitute the coordinates of X-axis in the XY coordinate system in Fig. 4, while the true value (1) and the false value (0) of perceptual distortion discrimination results form the coordinates along Y-axis; the sliding window begins to slide from the last compressed image (namely, the Nth compressed image $x_N$) on the right of X-axis in the coordinate system to the origin on the left of the XY coordinate system.

Before sliding the sliding window of preset size from right to left, preferably, the size of the sliding window is set as 6, thus enhancing the success rate of correcting erroneous results in the perceptual distortion discrimination result set.

In S302, in case of a sliding direction from right to left, when the number of compressed images is no less than the preset window threshold, the compressed image on the far right of the inner window of the sliding window is judged as JND compressed image; in case of a sliding direction from left to right, when the number of compressed images is not greater than the preset window threshold, the compressed image on the far left of the inner window of the sliding window is judged as JND compressed image.

In this embodiment of the invention, in case of a sliding direction from right to left, it is judged whether the number of compressed images whose perceptual distortion discrimination results within the sliding window are true values is greater than or equal to the preset window threshold; if yes, the sliding window stops sliding, and the compressed image on the far right of the inner window of the sliding window is judged as JND compressed image, as suggested by the kth compressed image $x_k$ at Point A in Fig. 4; otherwise, the sliding window continues to slide until the number of compressed images whose perceptual distortion discrimination results within the sliding window are true values is greater than or equal to the preset window threshold. In the case of a sliding direction from left to right, it is judged whether the number of compressed images whose perceptual distortion discrimination results within the sliding window are true values is less than or equal to the preset window threshold; if yes, the sliding window stops sliding, and the compressed image on the far left of the inner window of the sliding window is judged as JND compressed image; otherwise, the sliding window continues to slide until the number of compressed images whose perceptual distortion discrimination results within the sliding window are true values is less than or equal to the preset window threshold.

Preferably, the size of the preset window threshold is set as 5, thus enhancing the success rate of correcting erroneous results in the perceptual distortion discrimination result set.

In S303, the image compression indicator adopted for JND compressed image is set as the image-level JND threshold of the raw image.

In this embodiment of the invention, JND compressed image (namely, the kth compressed image $x_k$) is obtained by compressing the raw image with the corresponding image compression indicator, and the compression factor, bit rate, or other image quality indicator (such as Peak Signal to Noise Ratio (PSNR)) adopted for the compressed image $x_k$ during the compression process is used as the JND threshold of the raw image.

In this embodiment of the invention, the image-level JND search strategies based on the sliding window are adopted for fault tolerance, and the image-level JND threshold of the raw image is predicted, thus improving the accuracy of the prediction of the image-level JND threshold.

**Embodiment IV:**

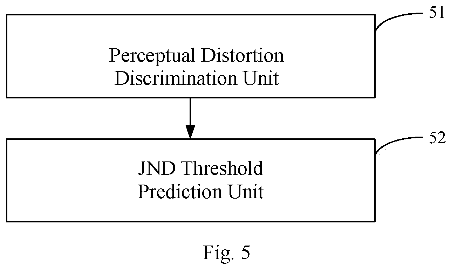

Fig. 5 shows a schematic view of the prediction device for the image-level JND threshold as provided in Embodiment IV of the invention. For clarification, only some parts regarding this embodiment of the invention are displayed, comprising:

A perceptual distortion discrimination unit 51, wherein perceptual distortion discrimination is conducted on the raw image and on the corresponding compressed images in the compressed image set of the said image through a trained multi-class perceptual distortion discriminator to obtain the set of perceptual distortion discrimination results; and
A JND threshold prediction unit 52, wherein preset image-level JND search strategies are adopted for fault tolerance of the set of perceptual distortion discrimination results, thus predicting the image-level JND threshold of the raw image.

In this embodiment of the invention, various units of the prediction device for the image-level JND threshold can be achieved through corresponding hardware or software units, while various units can serve as independent software or hardware units or can be integrated into a software and hardware unit, wherein the invention is not restricted in this respect. Specifically, the embodiments of various units have been described in the hereinbefore embodiments and will not be elaborated again here.

**Embodiment V:**

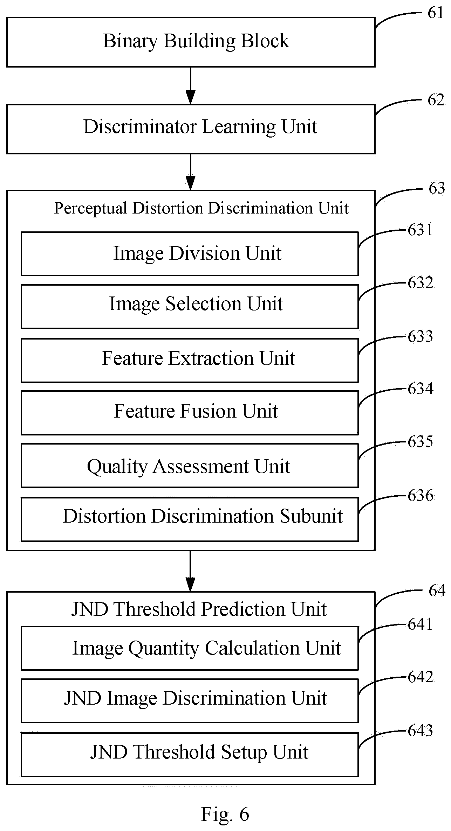

Fig. 6 shows a schematic view of the prediction device for the image-level JND threshold as provided in Embodiment V of the invention. For clarification, only some parts regarding this embodiment of the invention are displayed, comprising:

A binary building block 61, wherein Convolutional Neural Network, Linear Regression Function, and Logistic Regression Function are adopted for constructing a binary perceptual quality discriminator so as to make the multi-class perceptual distortion discriminator with this binary perceptual quality discriminator;
A discriminator learning unit 62, wherein pre-generated training image samples are adopted for the learning of the binary perceptual quality discriminator, and the first parameter set of Convolutional Neural Network, the second parameter set of Linear Regression Function and the third parameter set of Logistic Regression Function are adjusted based on the sample labels of training image samples so that the learned binary perceptual quality discriminator is utilized for perceptual distortion discrimination between the raw images and the compressed images in the compressed image set;
A perceptual distortion discrimination unit 63, wherein perceptual distortion discrimination is conducted on the raw image and on the corresponding compressed images in the compressed image set of the said image through a trained multi-class perceptual distortion discriminator to obtain the set of perceptual distortion discrimination results; and
A JND threshold prediction unit 64, wherein preset image-level JND search strategies are adopted for fault tolerance of the set of perceptual distortion discrimination results, thus predicting the image-level JND threshold of the raw image.

Wherein, preferably, a perceptual distortion discrimination unit 63 comprises:

An image block division unit 631, wherein the raw image and the compressed image are divided into image blocks of preset size to get the corresponding raw image block set and compressed image block set;
An image block selection unit 632, wherein based on the image block positions, a predetermined number of corresponding raw image blocks and compressed image blocks are chosen from the raw image block set and the compressed image block set, respectively;
A feature extraction unit 633, wherein feature extraction is conducted on the selected raw image blocks and compressed image blocks through preset Convolutional Neural Network to get the corresponding raw image block feature set and compressed image block feature set;
A feature fusion unit 634, wherein feature fusion is implemented on raw image block features in the raw image block feature set and on compressed image block features in the compressed image block feature set based on preset feature fusion ways to get the fused feature set;

A quality assessment unit 635, wherein the quality of compressed image blocks is assessed through the preset linear regression function based on the fused feature set, and the corresponding quality score set is thus obtained; and

A distortion discrimination subunit 636, wherein based on the quality score set, the preset logistic regression function is adopted to judge whether there is a perceptual distortion between the raw image and the compressed image, and the perceptual distortion discrimination results are obtained.

A JND threshold prediction unit 64 consists of:

An image quantity calculation unit 641, wherein based on the corresponding compressed image sequences of the set of perceptual distortion discrimination results, the sliding window of preset size slides along the preset sliding direction, and the number of compressed images whose perceptual distortion discrimination results within the sliding window are true values is calculated, wherein the sliding director is from right to left or from left to right;

A JND image discrimination unit 642, wherein in case of a sliding direction from right to left, when the number of compressed images is no less than the preset window threshold, the compressed image on the far right of the inner window of the sliding window is judged as JND compressed image; in case of a sliding direction from left to right, when the number of compressed images is not greater than the preset window threshold, the compressed image on the far left of the inner window of the sliding window is judged as the said JND compressed image; and

A JND threshold setup unit 643, wherein the image compression indicator adopted for JND compressed image is set as the image-level JND threshold of the raw image.

In this embodiment of the invention, various units of the prediction device for the image-level JND threshold can be achieved through corresponding hardware or software units, while various units can serve as independent software or hardware units or can be integrated into a software and hardware unit, wherein the invention is not restricted in this respect. Specifically, the embodiments of various units have been described in the hereinbefore embodiments and will not be elaborated again here.

## Embodiment VI:

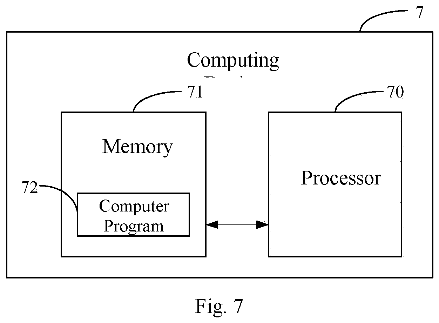

Fig. 7 shows a schematic view of the computing device as provided in Embodiment VI of the invention. For clarification, only some parts regarding this embodiment of the invention are displayed.

In this embodiment of the invention, the computing device 7 consists of a processor 70, a memory 71, and a computer program 72 stored in memory 71 and executable on the processor 70. When processor 70 executes the computer program 72, the steps in the hereinbefore embodiments of the prediction method for the image-level JND threshold are effectuated, such as S101 or S102 in Fig.1. Alternatively, when processor 70 executes the computer program 72, the functions of various units in the hereinbefore device embodiments are effectuated, such as the functions of Unit 51 and Unit 52 in Fig. 5.

In this embodiment of the invention, perceptual distortion discrimination is conducted on the raw image and on the compressed images in the compressed image set of the said image through trained multi-class perceptual distortion discriminator to obtain the set of perceptual distortion discrimination results, and preset image-level JND search strategies are adopted for fault tolerance of the said set of perceptual distortion discrimination results to predict the image-level JND threshold of the said image, thus reducing the prediction deviation of the image-level JND threshold, improving the prediction accuracy of the image-level JND threshold, and bringing the predicted JND threshold closer to the human visual system's perception of the quality of the entire image.

The computing device in this embodiment of the invention consists of a personal computer and a server. When the processor 70 in the computing device 7 executes the computer program 72, the steps of effectuating the prediction method for the image-level JND threshold have been described in the hereinbefore method embodiments and will not be further elaborated here.

## Embodiment VII:

In this embodiment of the invention, a computer-readable storage medium is presented, provided with a computer program. When the computer program is executed by the processor, the steps in the prediction method embodiments for the image-level JND threshold are effectuated, such as S101 and S102 in Fig. 1. Alternatively, when the computer program is executed by the processor, the functions of various units in the hereinbefore device embodiments are effectuated, such as the functions of Unit 51 and Unit 52 in Fig. 5.

In this embodiment of the invention, perceptual distortion discrimination is conducted on the raw image and on the compressed images in the compressed image set of the said image through trained multi-class perceptual distortion discriminator to obtain the set of perceptual distortion discrimination results, and preset image-level JND search strategies are adopted for fault tolerance of the said set of perceptual distortion discrimination results to predict the image-level JND threshold of the said image, thus reducing the prediction deviation of the image-level JND threshold, improving the prediction accuracy of the image-level JND threshold, and bringing the predicted JND threshold closer to the human visual system's perception of the quality of the entire image.

In this embodiment of the invention, the computer-readable storage medium comprises any physical device or recording medium, such as ROM/RAM, disc, compact disc, flash memory, and other memories.

## Claims

1. A computer-implemented method for predicting an image-level Just Noticeable Distortion (JND), comprising the following steps:

   conducting (S101) perceptual distortion discrimination on a raw image and on compressed images in a compressed image set corresponding to the said raw image, by using a trained multi-class perceptual distortion discriminator, to obtain a set of perceptual distortion discrimination results, where perceptual distortion discrimination results comprise true values and false values; and
   adopting (S102) preset image-level JND search strategies for fault tolerance of the said set of perceptual distortion discrimination results, thus predicting the image-level JND of the said raw image;
   wherein the step of adopting (S102) preset image-level JND search strategies for fault tolerance of the said set of perceptual distortion discrimination results comprises:

   based on the corresponding compressed image sequences of the said set of perceptual distortion discrimination results, sliding (S301) a sliding window of preset size along a preset sliding direction in an XY coordinate system, and calculating the number of compressed images whose said perceptual distortion discrimination results within the said sliding window are true values, wherein the compressed image sequences corresponding to the perceptual distortion discrimination result set constitute the coordinates of X-axis in the XY coordinate system, the true value and the false value of perceptual distortion discrimination results form the coordinates along Y-axis in the XY coordinate system, and the said sliding direction is from right to left or from left to right along the X-axis of the XY coordinate system;
   in the case of the said sliding direction being from right to left, when the number of the said compressed images is no less than a preset window threshold, determining (S302) the compressed image on the far right of the inner window of the said sliding window as a JND compressed image; in case of the said sliding direction being from left to right, when the number of the said compressed images is not greater than the said preset window threshold, determining the compressed image on the far left of the inner window of the said sliding window as the said JND compressed image; and setting (S303) an image compression indicator adopted for the said JND compressed image as the image-level JND of the said raw image.

2. The method as claimed in Claim 1, **characterized in that** the step of conducting (S101) perceptual distortion discrimination on the raw image and on the corresponding compressed images in the compressed image set corresponding to the said raw image by using a trained multi-class perceptual distortion discriminator comprises:

   dividing (S201) the said raw image and the said compressed image into image blocks of preset size to get a corresponding raw image block set and a compressed image block set;
   based on positions of the image blocks, choosing (S202) a predetermined number of corresponding raw image blocks and compressed image blocks from the said raw image block set and the said compressed image block set;
   conducting (S203) feature extraction on the said selected raw image blocks and said selected compressed image blocks, by using a preset Convolutional Neural Network, to get the corresponding raw image block feature set and the compressed image block feature set;
   implementing (S204) feature fusion on raw image block features in the said raw image block feature set and on compressed image block features in the said compressed image block feature set based on preset feature fusion ways to get the fused feature set;
   accessing (S205) qualities of the said compressed image blocks through a preset linear regression function based on the said fused feature set, and thus obtaining a corresponding quality score set; and
   adopting (S206) based on the said quality score set, a preset logistic regression function to judge whether there is a perceptual distortion between the said raw image and the said compressed image, and obtaining the said perceptual distortion discrimination results.

3. The method as claimed in Claim 1, **characterized in that** before the step of conducting (S101) perceptual distortion discrimination on the raw image and on the corresponding compressed images in the compressed image set corresponding to the said raw image, by using a trained multi-class perceptual distortion discriminator, the said method also comprises:

adopting the said Convolutional Neural Network, the said Linear Regression Function, and the said Logistic Regression Function for constructing a binary perceptual quality discriminator, so as to use said binary perceptual quality discriminator(s) to construct the said multi-class perceptual distortion discriminator; and

adopting pre-generated training image samples for the learning of the said binary perceptual quality discriminator, and adjusting a first parameter set of the said Convolutional Neural Network, a second parameter set of the said Linear Regression Function, and a third parameter set of the said Logistic Regression Function based on sample labels of the training image samples so that the learned binary perceptual quality discriminator is utilized for perceptual distortion discrimination between the said raw images and the said compressed images in the compressed image set.

4. A device for predicting an image-level Just Noticeable Distortion (JND), said device comprises:

a perceptual distortion discrimination unit (51, 63), configured to conduct perceptual distortion discrimination on the raw image and on the compressed images in the compressed image set corresponding to the said raw image, by using a trained multi-class perceptual distortion discriminator, to obtain a set of perceptual distortion discrimination results, where perceptual distortion discrimination results comprise true values and false values; and a JND prediction unit (52, 64), configured to adopt preset image-level JND search strategies for fault tolerance of the said set of perceptual distortion discrimination results, and thus predict the image-level JND of the said raw image;

wherein the said JND prediction unit (64) comprises:

an image quantity calculation unit (641) configured to slide, based on the corresponding compressed image sequences of the said set of perceptual distortion discrimination results, a sliding window of a preset size along a preset sliding direction in an XY coordinate system, and calculate the number of compressed images whose said perceptual distortion discrimination results within the said sliding window are true values, wherein the compressed image sequences corresponding to the perceptual distortion discrimination result set constitute the coordinates of X-axis in the XY coordinate system, the true value and the false value of perceptual distortion discrimination results form the coordinates along Y-axis in the XY coordinate system, and the said sliding director is from right to left or from left to right along the X-axis of the XY coordinate system;

a JND image discrimination unit (642), configured to determine, in case of the said sliding direction being from right to left and when the number of the said compressed images being no less than the preset window threshold, the compressed image on the far right of the inner window of the said sliding window as a JND compressed image; and determine, in case of the said sliding direction being from left to right and when the number of the said compressed images being not greater than the said preset window threshold, the compressed image on the far left of the inner window of the said sliding window as the said JND compressed image; and

a JND setup unit (643), configured to set the image compression indicator adopted for the said JND compressed image as the image-level JND of the said raw image.

5. The device as claimed in Claim 4, **characterized in that** the perceptual distortion discrimination unit (63) comprises:

an image block division unit (631), configured to divide the said raw image and the said compressed image into image blocks of a preset size to get the corresponding raw image block set and a compressed image block set;

an image block selection unit (632), configured to select, based on the image blocks' positions, a predetermined number of corresponding raw image blocks and compressed image blocks from the said raw image block set and the said compressed image block set, respectively;

a feature extraction unit (633), configured to conduct feature extraction on the said selected raw image blocks and the selected compressed image blocks, by using a preset Convolutional Neural Network, to get the corresponding raw image block feature set and the compressed image block feature set;

a feature fusion unit (634), configured to implement feature fusion on raw image block features in the said raw image block feature set and on compressed image block features in the said compressed image block feature set based on preset feature fusion ways to get the fused feature set;

a quality assessment unit (635), configured to access qualities of the said compressed image blocks through a preset linear regression function based on the said fused feature set, and thus obtain the corresponding quality score set; and

a distortion discrimination subunit (636), configured to adopt, based on the said quality score set, a preset logistic regression function to judge whether there is a perceptual distortion between the said raw image and the said compressed image, and obtain the said perceptual distortion discrimination results.

6. The device as claimed in Claim 5, **characterized in that** the said device also comprises:

a binary building block (61), configured to adopt the said Convolutional Neural Network, the said Linear Regression Function, and the said Logistic Regression Function for constructing a binary perceptual quality discriminator, so as to use the said binary perceptual quality discriminator to construct the said multi-class perceptual distortion discriminator; and

a discriminator learning unit (62), configured to adopt pre-generated training image samples for the learning of the said binary perceptual quality discriminator, and adjust a first parameter set of the said Convolutional Neural Network, a second parameter set of the said Linear Regression Function, and a third parameter set of the said Logistic Regression Function based on sample labels of the training image samples so that the learned binary perceptual quality discriminator is utilized for perceptual distortion discrimination between the said raw images and the said compressed images in the compressed image set.

7. A computer-readable storage medium comprising instructions which, when executed by a computer, cause the computer to carry out the steps of the method of claims 1-3.

**Patentansprüche**

1. Ein computerimplementiertes Verfahren zur Vorhersage einer Bildebene-Just Noticeable Distortion (JND), umfassend die folgenden Schritte:

Durchführen (S101) einer Wahrnehmungsverzerrungsdiskriminierung am Rohbild und an komprimierten Bildern in einem komprimierten Bildsatz, der dem Rohbild entspricht, unter Verwendung eines ausgebildeten mehrklassigen Wahrnehmungsverzerrungsdiskriminators, um einen Satz von Wahrnehmungsverzerrungsdiskriminierungsergebnissen zu erhalten, wobei die Wahrnehmungsverzerrungsdiskriminierungsergebnisse wahre Werte und falsche Werte umfassen; und

Annahme (S102) vorgegebener Bildebene-JND-Suchstrategien zur Fehlertoleranz der Satz von Wahrnehmungsverzerrungsdiskriminierungsergebnissen, wodurch die Bildebene-JND des Rohbilds vorhergesagt wird;

wobei der Schritt der Annahme (S102) vorgegebener Bildebene-JND-Suchstrategien zur Fehlertoleranz der Satz von Wahrnehmungsverzerrungsdiskriminierungsergebnissen umfasst:

basierend auf den entsprechenden komprimierten Bildsequenzen des Satzes von Wahrnehmungsverzerrungsdiskriminierungsergebnissen ein Gleitfenster von vorgegebener Größe entlang einer vorgegebenen Gleitrichtung in einem XY-Koordinatensystem verschieben (S301), und die Anzahl komprimierter Bilder berechnen, deren die Wahrnehmungsverzerrungsdiskriminierung innerhalb des Gleitfensters wahre Werte ist, wobei die komprimierten Bildsequenzen, die dem Wahrnehmungsverzerrungsdiskriminierungsergebnissatz entsprechen, die Koordinaten der X-Achse im XY-Koordinatensystem bilden, der wahre Wert und der falsche Wert der Wahrnehmungsverzerrungsdiskriminierungsergebnisse die Koordinaten entlang der Y-Achse im XY-Koordinatensystem bilden, und die Gleitrichtung von rechts nach links oder von links nach rechts entlang der X-Achse des XY-Koordinatensystems erfolgt;

bei der Gleitrichtung von rechts nach links, wenn die Anzahl der komprimierten Bilder nicht weniger als eine vorgegebene Fensterschwelle ist, das komprimierte Bild auf der äußersten rechten Seite des inneren Fensters des Gleitfensters als komprimiertes JND-Bild bestimmen (S302); bei der Gleitrichtung von links nach rechts, wenn die Anzahl der komprimierten Bilder nicht größer ist als die vorgegebene Fensterschwelle, das komprimierten Bildes auf der äußersten linksten Seite des inneren Fensters des Gleitfensters als komprimiertes JND-Bild bestimmen; und

Einstellen (S303) eines Bildkompressionsindikators, der für das komprimiertes JND-Bild verwendet wird, als Bildebene-JND des Rohbildes.

2. Das Verfahren nach Ansprüch 1, **dadurch gekennzeichnet, dass** der Schritt der Durchführung (S101) einer Wahrnehmungsverzerrungsdiskriminierung am Rohbild und an den komprimierten Bildern in dem komprimierten Bildsatz, der dem Rohbild entspricht, unter Verwendung eines ausgebildeten mehrklassigen Wahrnehmungsverzerrungsdiskriminators umfasst:

> Aufteilen (S201) des Rohbild und des komprimierte Bild in Bildblöcke von vorgegebener Größe, um einen entsprechenden Rohbildblocksatz und einen komprimierten Bildblocksatz zu erhalten;
> Auswähle (S202) eine vorgegebene Anzahl entsprechender Rohbildblöcke und komprimierter Bildblöcke aus dem Rohbildblöckensatz und dem komprimierten Bildblöckensatz basierend auf Positionen der Bildblöcke;
> Durchführen (S203) einer Merkmalextraktion auf den ausgewählten Rohbildblöcken und den ausgewählten komprimierten Bildblöcken unter Verwendung eines vorgegebenen Faltungsnetzwerk, um den entsprechenden Rohbildblock-Merkmalensatz und den komprimierten Bildblock-Merkmalensatz zu erhalten;
> Implementieren (S204) einer Funktionsfusion an Rohbildblock-Merkmalen im Rohbildblock-Merkmalensatz und an komprimierten Bildblock-Merkmalen im komprimierten Bildblock-Merkmalensatz basierend auf vorgegebenen Funktionsfusionsweisen, um den verschmelzten Merkmalensatz zu erhalten;
> Zugriff (S205) auf Qualitäten der komprimierten Bildblöcke über eine vorgegebene lineare Regressionsfunktion basierend auf dem verschmelzten Merkmalensatz und somit Erhalt eines entsprechenden Qualitätssteigersatzes; und
> Annahme (S206) basierend auf dem Qualitätssteigersatz einer vorgegebenen logistischen Regressionsfunktion zur Beurteilung, ob zwischen dem Rohbild und dem komprimierten Bild eine Wahrnehmungsverzerrung vorliegt, und Erhalt der Wahrnehmungsverzerrungsdiskriminierungsergebnisse.

3. Das Verfahren nach Ansprüch 1, **dadurch gekennzeichnet, dass** vor dem Schritt der Durchführung (S101) einer Wahrnehmungsverzerrungsdiskriminierung am Rohbild und an den komprimierten Bildern in dem komprimierten Bildsatz, der dem Rohbild entspricht, unter Verwendung eines ausgebildeten mehrklassigen Wahrnehmungsverzerrungsdiskriminators, das Verfahren ferner umfasst:

> Annahme der Faltungsnetzwerk, der lineare Regressionsfunktion und der logistische Regressionsfunktion zu dem Aufbau eines binären Wahrnehmungsqualitätsdiskriminators, um die binären Wahrnehmungsqualitätsdiskriminatoren zu dem Aufbau des mehrklassigen Wahrnehmungsverzerrungsdiskriminators zu verwenden; und
> Annahme vorgefertigter Trainingssample-Bilder für das Lernen des binären Wahrnehmungsqualitätsdiskriminators und Passten einer erste Parametersatz des Faltungsnetzwerk, einer zweite Parametersatz des lineare Regressionsfunktions und einer dritte Parametersatz des logistischen Regressionsfunktions basierend auf den Sample-Labels der Trainingssample-Bilder an, damit der gelernte binäre Wahrnehmungsqualitätsdiskriminator für die Wahrnehmungsverzerrungsdiskriminierung zwischen den Rohbildern und den komprimierten Bildern in dem komprimierten Bildsatz verwendet wird.

4. Eine Vorrichtung zur Vorhersage einer Bildebene-Just Noticeable Distortion (JND), umfassend:

> eine Wahrnehmungsverzerrungsdiskriminierungseinheit (51, 63), konfiguriert, um eine Wahrnehmungsverzerrungsdiskriminierung auf dem Rohbild und auf den komprimierten Bildern im dem Rohbild entsprechenden komprimierten Bildsatz durchzuführen, unter Verwendung eines ausgebildeten mehrklassigen Wahrnehmungsverzerrungsdiskriminators, um einen Satz von Wahrnehmungsverzerrungsdiskriminierungsergebnissen zu erhalten, wobei die Wahrnehmungsverzerrungsdiskriminierungsergebnisse wahre Werte und falsche Werte umfassen; und eine JND-Vorhersageeinheit (52, 64), konfiguriert, um vorgegebene Bildebene-JND-Suchstrategien für Fehlertoleranz der Reihe von Wahrnehmungsverzerrungsdiskriminierungsergebnissen anzunehmen und somit die Bildebene-JND des Rohbilds vorherzusagen;
> wobei die JND-Vorhersageeinheit (64) umfasst:
>
> > eine Bildmengenrechnungseinheit (641), die konfiguriert ist, um auf der Grundlage der entsprechenden komprimierten Bildsequenzen des Satzes von Wahrnehmungsverzerrungsdiskriminierungergebnissen ein Gleitfenster einer vorgegebenen Größe entlang einer vorgegebenen Gleitrichtung in einem XY-Koordinatensystem zu verschieben und die Anzahl komprimierter Bilder zu berechnen, deren die Wahrnehmungsverzerrungsdiskriminierungsergebnisse innerhalb des Gleitfensters wahre Werte sind, wobei die komprimierten Bildsequenzen, die dem Wahrnehmungsverz

errungsdiskriminierungsergebnissatz entsprechen, die Koordinaten der X-Achse im XY-Koordinatensystem bilden, der wahre Wert und der falsche Wert der Wahrnehmungsverzerrungsdiskriminierungsergebnisse die Koordinaten entlang der Y-Achse im XY-Koordinatensystem bilden, und die Gleitrichtung von rechts nach links oder von links nach rechts entlang der X-Achse des XY-Koordinatensystems erfolgt; eine JND-Bilddiskriminierungseinheit (642), ausgebildet, um, falls die Gleitrichtung von rechts nach links ist und die Anzahl der komprimierten Bilder nicht geringer ist als die vorgegebene Fensterschwelle, das komprimierte Bild auf der äußersten rechten Seite des inneren Fensters des Gleitfensters als ein JND-komprimiertes Bild zu bestimmen; und bestimmen, wenn die Gleitrichtung von links nach rechts ist und die Anzahl der komprimierten Bilder nicht größer ist als die vorgegebene Fensterschwelle, das komprimierten Bildes auf der äußersten linksten Seite des inneren Fensters des Gleitfensters als komprimiertes JND-Bild; und eine JND-Einrichtungseinheit (643), konfiguriert, um den für das komprimierte JND-Bild angenommenen Bildkompressionsindikator als das Bildebene-JND des Rohbilds einzustellen.

5. Die Vorrichtung nach Anspruch 4, **dadurch gekennzeichnet, dass** die Wahrnehmungsverzerrungsdiskriminierungseinheit (63) umfasst:

eine Bildblockteilungseinheit (631), konfiguriert, um das Rohbild und das komprimierte Bild in Bildblöcke von vorgegebener Größe aufzuteilen, um den entsprechenden Rohbildblocksatz und einen komprimierten Bildblocksatz zu erhalten; eine Bildblockauswahleinheit (632), konfiguriert, um basierend auf den Positionen der Bildblöcke eine vorgegebene Anzahl entsprechender Rohbildblöcke und komprimierter Bildblöcke aus dem Rohbildblocksatz und dem komprimierten Bildblocksatz auszuwählen; eine Merkmalextraktionseinheit (633), konfiguriert, um eine Merkmalextraktion an den ausgewählten Rohbildblöcken und den ausgewählten komprimierten Bildblöcken unter Verwendung eines vorgegebenen Faltungsnetzwerk durchzuführen, um den entsprechenden Bildblock-Merkmalensatz und den komprimierten Bildblock-Merkmalensatz zu erhalten; eine Funktionsfusioneinheit (634), die konfiguriert ist, um eine Funktionsfusion an Rohbildblock-Merkmalen im Rohbildblock-Merkmalensatz und an komprimierten Bildblock-Merkmalen im komprimierten Bildblock-Merkmalensatz basierend auf vorgegebenen Funktionsfusionsweisen zu implementieren, um den verschmelzten Merkmalensatz zu erhalten; eine Qualitätsbewertungseinheit (635), konfiguriert, um auf Qualitäten der komprimierten Bildblöcke über eine vorgegebene lineare Regressionsfunktion basierend auf dem verschmelzten Merkmalensatz zuzugreifen und somit den entsprechenden Qualitätssteigersatz zu erhalten; und eine Verformungsdiskriminierungsuntereinheit (636), konfiguriert, um basierend auf dem Qualitätssteigersatz eine vorgegebene logistische Regressionsfunktion anzunehmen, um zu beurteilen, ob eine wahrnehmungsverzerrung zwischen dem Rohbild und dem komprimierten Bild vorliegt, und die Wahrnehmungsverzerrungsdiskriminierungsergebnisse zu erhalten.

6. Die Vorrichtung nach Anspruch 5, **dadurch gekennzeichnet, dass** die Vorrichtung ferner umfasst:

einen binären Baustein (61), der konfiguriert ist, das Faltungsnetzwerk, die lineare Regressionsfunktion und die logistischen Regressionsfunktion zum Aufbau eines binären Wahrnehmungsqualitätsdiskriminators zu übernehmen, um den binären Wahrnehmungsqualitätsdiskriminatoren zum Aufbau des mehrklassigen Wahrnehmungsverzerrungsdiskriminators zu verwenden; und eine Diskriminatorlerneinheit (62), konfiguriert, um vorgenerierte Trainingssample-Bilder für das Lernen des binären Wahrnehmungsqualitätsdiskriminators anzunehmen, und einen ersten Parametersatz des Faltungsnetzwerk, einen zweiten Parametersatz der lineare Regressionsfunktion und einen dritten Parametersatz der logistischen Regressionsfunktion basierend auf den Sample-Labels der Trainingssample-Bilder anzupassen, so dass der erlernte binäre Wahrnehmungsqualitätsdiskriminator zur Wahrnehmungsverzerrungsdiskriminierung zwischen den Rohbildern und den komprimierten Bildern im komprimierten Bildsatz verwendet wird.

7. Ein Computerlesbares Speichermedium, umfassend Anweisungen, die, wenn sie von einem Computer ausgeführt werden, dazu führen, dass der Computer die Schritte des Verfahrens nach den Ansprüchen 1 bis 3 durchführt.

## Revendications

1. Un procédé mis en œuvre par ordinateur pour prédire une distorsion juste perceptible (JND) au niveau de l'image, comprenant les étapes suivantes :

effectuer (S101) une discrimination de distorsion perceptuelle sur une image brute et sur des images compressées dans un ensemble d'images compressées correspondent à l'image brute, en utilisant un discriminateur de distorsion perceptuelle multiclasse formé, pour obtenir un ensemble de résultats de discrimination de distorsion perceptuelle, où les résultats de discrimination de distorsion perceptuelle comprennent des valeurs vraies et des valeurs fausses ; et

adopter (S102) des stratégies de recherche JND au niveau de l'image prédéfinies pour la tolérance de défaut de l'ensemble de résultats de discrimination de distorsion perceptive, prédisant ainsi le JND au niveau de l'image de l'image brute ;

où l'étape d'adoption (S102) de stratégies de recherche JND au niveau de l'image prédéfinies pour tolérance de défaut de l'ensemble de résultats de discrimination de distorsion perceptive comprend :

sur la base des séquences d'images compressées correspondantes du ensemble de résultats de discrimination de distorsion perceptuelle, faire coulisser (S301) une fenêtre coulissante d'une taille prédéfinie le long d'une direction de coulissement prédéfinie dans un système de coordonnées XY, et calculer le nombre d'images compressées dont les résultats de discrimination de distorsion perceptuelle dans la fenêtre coulissante sont des valeurs vraies, dans lequel les séquences d'images compressées correspondantes à l'ensemble de résultats de discrimination de distorsion perceptuelle constituent les coordonnées de l'axe X dans le système de coordonnées XY, la valeur vraie et la valeur fausse des résultats de discrimination de distorsion perceptuelle forment les coordonnées le long de l'axe Y dans le système de coordonnées XY, et la direction de coulissement est de droite à gauche ou de gauche à droite le long de l'axe X du système de coordonnées XY ;

dans le cas où la direction de coulissement est de droite à gauche, lorsque le nombre des images compressées n'est pas inférieur à un seuil de fenêtre prédéfini, déterminer (S302) l'image compressée à l'extrême droite de la fenêtre intérieure de la fenêtre coulissante en tant qu'image compressée JND; dans le cas où la direction de coulissement est de gauche à droite, lorsque le nombre des images compressées n'est pas supérieur à le seuil de fenêtre prédéfini, déterminer l'image compressée à l'extrême gauche de la fenêtre intérieure de la fenêtre coulissante en tant quela image compressée JND ; et

définir (S303) un indicateur de compression d'image adopté pour l'image compressée JND en tant que JND au niveau d'image de l'image brute.

2. Le procédé selon la revendication 1, **caractérisé en ce que** l'étape d'effectuer (S101) d'une discrimination de distorsion perceptive sur l'image brute et sur les images compressées correspondantes dans l'ensemble d'images compressées correspondent à l'image brute en utilisant un discriminateur de distorsion perceptive multiclasse formé comprend :

diviser (S201) l'image brute et l'image compressée en blocs d'image de taille prédéfinie pour obtenir un ensemble de blocs d'image brute correspondent et un ensemble de blocs d'image compressée ;

en fonction des positions des blocs d'image, choisir (S202) un nombre prédéterminé de blocs d'image bruts et de blocs d'image compressés correspondent à partir de l'ensemble de blocs d'image bruts et de l'ensemble de blocs d'image compressés ;

effectuer (S203) une extraction de caractéristiques sur les blocs d'images brutes sélectionnés et les blocs d'images compressées sélectionnés, en utilisant un réseau neuronal convolutionnel prédéfini, pour obtenir l'ensemble de caractéristiques de blocs d'images brutes correspondants et l'ensemble de caractéristiques de blocs d'images compressées ;

mise en œuvre (S204) d'une fusion de caractéristiques sur des caractéristiques de bloc d'image brut dans l'ensemble de caractéristiques de bloc d'image brut et sur des caractéristiques de bloc d'image compressé dans l'ensemble de caractéristiques de bloc d'image compressé en fonction de moyens de fusion de caractéristiques prédéfinis pour obtenir l'ensemble de caractéristiques fusionnées ;

accéder (S205) aux qualités desdits blocs d'images compressées par une fonction de régression linéaire prédéfinie basée sur l'ensemble de caractéristiques fusionnées, et ainsi obtenir un ensemble de scores de qualité correspondant ; et

adopter (S206), en fonction de l'ensemble de scores de qualité, une fonction de régression logistique prédéfinie pour juger s'il y a une distorsion perceptuelle entre l'image brute et l'image compressée, et obtenir les résultats de discrimination de distorsion perceptuelle.

3. Le Procédé selon la revendication 1, **caractérisé en ce qu'**avant l'étape d'effectuer (S101) d'une discrimination de distorsion perceptuelle sur l'image brute et sur des images compressées correspondantes dans l'ensemble d'images compressées correspondent à l'image brute, en utilisant un discriminateur de distorsion perceptuelle multiclasse formé, le procédé comprend également :

adopter le réseau neuronal convolutionnel, la fonction de régression linéaire et la fonction de régression logistique pour construire un discriminateur de qualité perceptuelle binaire, de manière à utiliser le discriminateur de qualité perceptuelle binaire pour construire le discriminateur de distorsion perceptuelle multiclasse ; et adopter des échantillons d'images d'entraînement prégénérés pour l'apprentissage du discriminateur de qualité perceptuelle binaire, et ajuster un premier ensemble de paramètres du réseau neuronal convolutionnel, un deuxième ensemble de paramètres due fonction de régression linéaire, et un troisième ensemble de paramètres due fonction de régression logistique à partir d'étiquettes d'échantillons des échantillons d'images d'entraînement de sorte que le discriminateur de qualité perceptuelle binaire appris soit utilisé pour la discrimination de distorsion perceptuelle entre lesdites images brutes et lesdites images compressées dans l'ensemble d'images compressées.

4. Un dispositif de prédiction d'une distorsion juste perceptible (JND) au niveau de l'image, le dispositif comprenant :

une unité de discrimination de distorsion perceptuelle (51, 63), configurée pour effectuer une discrimination de distorsion perceptuelle sur l'image brute et sur les images compressées dans l'ensemble d'images compressées correspondent à l'image brute, en utilisant un discriminateur de distorsion perceptuelle multiclasse formé, pour obtenir un ensemble de résultats de discrimination de distorsion perceptuelle, où les résultats de discrimination de distorsion perceptuelle comprennent des valeurs vraies et des valeurs fausses; et une unité de prédiction JND (52, 64), configurée pour adopter des stratégies de recherche JND au niveau d'image prédéfinies pour la tolérance à défaut du ensemble de résultats de discrimination de distorsion perceptive, et ainsi prédire la JND au niveau d'image de l'image brute;
la unité de prédiction JND (64) comprend :

une unité de calcul de quantité d'image (641) configurée pour glisser, en fonction des séquences d'images compressées correspondantes du ensemble de résultats de discrimination de distorsion perceptuelle, une fenêtre coulissante d'une taille prédéfinie le long d'une direction de coulissement prédéfinie dans un système de coordonnées XY, et calculer le nombre d'images compressées dont les résultats de discrimination de distorsion perceptuelle dans la fenêtre coulissante sont des valeurs vraies, dans lequel les séquences d'images compressées correspondantes à l'ensemble de résultats de discrimination de distorsion perceptuelle constituent les coordonnées de l'axe X dans le système de coordonnées XY, la valeur vraie et la valeur fausse des résultats de discrimination de distorsion perceptuelle forment les coordonnées le long de l'axe Y dans le système de coordonnées XY, et la direction de coulissement est de droite à gauche ou de gauche à droite le long de l'axe X du système de coordonnées XY ;
une unité de discrimination d'image JND (642), configurée pour déterminer, dans le cas où la direction de coulissement est de droite à gauche et lorsque le nombre des images compressées n'est pas inférieur au seuil de fenêtre prédéfini, l'image compressée à l'extrême droite de la fenêtre interne de la fenêtre coulissante en tant qu'image compressée JND; et déterminer, dans le cas où la direction de coulissement est de gauche à droite et lorsque le nombre des images compressées n'est pas supérieur à le seuil de fenêtre prédéfini, l'image compressée à l'extrême gauche de la fenêtre interne de la fenêtre coulissante en tant quela image compressée JND; et
une unité de configuration JND (643), configurée pour définir l'indicateur de compression d'image adopté pour l'image compressée JND en tant que JND au niveau d'image de l'image brute.

5. Le dispositif selon la revendication 4, **caractérisé en ce que** l'unité de discrimination de distorsion perceptuelle (63) comprend :

une unité de division de blocs d'image (631), configurée pour diviser l'image brute et l'image compressée en blocs d'image d'une taille prédéfinie pour obtenir l'ensemble de blocs d'image brute correspondant et un ensemble de blocs d'image compressé ;

une unité de sélection de blocs d'image (632), configurée pour choisir, en fonction des positions des blocs d'image, un nombre prédéterminé de blocs d'image bruts et de blocs d'image compressés correspondants à partir de l'ensemble de blocs d'image bruts et de l'ensemble de blocs d'image compressés, respectivement ;

une unité d'extraction de caractéristiques (633), configurée pour effectuer l'extraction de caractéristiques sur les blocs d'image brute sélectionnés et les blocs d'image compressés sélectionnés, en utilisant un réseau neuronal convolutionnel prédéfini, pour obtenir l'ensemble de caractéristiques de bloc d'image brute correspondant et l'ensemble de caractéristiques de bloc d'image compressé ;

une unité de fusion de caractéristiques (634), configurée pour mettre en œuvre la fusion de caractéristiques sur des caractéristiques de bloc d'image brut dans l'ensemble de caractéristiques de bloc d'image brut et sur des caractéristiques de bloc d'image compressées dans l'ensemble de caractéristiques de bloc d'image compressé en fonction de moyens de fusion de caractéristiques prédéfinis pour obtenir l'ensemble de caractéristiques fusionnées ;

une unité d'évaluation de la qualité (635), configurée pour accéder aux qualités desdits blocs d'images compressées par une fonction de régression linéaire prédéfinie basée sur l'ensemble de caractéristiques fusionnées, et ainsi obtenir l'ensemble de scores de qualité correspondant ; et

une sous-unité de discrimination de distorsion (636), configurée pour adopter, en fonction de l'ensemble de scores de qualité, une fonction de régression logistique prédéfinie pour juger s'il y a une distorsion perceptive entre l'image brute et l'image compressée, et obtenir les résultats de discrimination de distorsion perceptuelle.

6. Le dispositif selon la revendication 5, **caractérisé en ce que** le dispositif comprend également :

un bloc de construction binaire (61), configuré pour adopter le réseau neuronal convolutionnel, la fonction de régression linéaire et la fonction de régression logistique pour construire un discriminateur de qualité perceptuelle binaire, de manière à utiliser le discriminateur de qualité perceptuelle binaire pour construire le discriminateur de distorsion perceptuelle multiclasse ; et
une unité d'apprentissage de discriminateur (62), configurée pour adopter des échantillons d'images d'entraînement prégénérés pour l'apprentissage du discriminateur de qualité perceptuelle binaire, et ajuster un premier ensemble de paramètres du réseau neuronal convolutionnel, un deuxième ensemble de paramètres due fonction de régression linéaire, et un troisième ensemble de paramètres due fonction de régression logistique à partir d'étiquettes d'échantillons des échantillons d'images d'entraînement de sorte que le discriminateur de qualité perceptuelle binaire appris soit utilisé pour la discrimination de distorsion perceptuelle entre lesdites images brutes et lesdites images compressées dans l'ensemble d'images compressées.

7. Un médium de stockage lisible par ordinateur comprenant des instructions qui, lorsqu'elles sont exécutées par un ordinateur, permettent à l'ordinateur d'effectuer les étapes du procédé selon les revendications 1 à 3.

Perceptual distortion discrimination is conducted on the raw image and on the corresponding compressed images in the compressed image set of the said image through a trained multi-class perceptual distortion discriminator to obtain the set of perceptual distortion discrimination results.

— S101

Preset image-level JND search strategies are adopted for fault tolerance of the set of perceptual distortion discrimination results, thus predicting the image-level JND threshold of the raw image.

— S102

Fig. 1

The raw image and the compressed image are divided into image blocks of preset size to get the corresponding raw image block set and compressed image block set.

— S201

Based on the image block positions, a predetermined number of corresponding raw image blocks and compressed image blocks are chosen from the raw image block set and the compressed image block set.

— S202

Feature extraction is conducted on the selected raw and compressed image blocks through preset Convolutional Neural Network to get the corresponding raw image block feature set and compressed image block feature set.

— S203

Feature fusion is implemented on raw image block features in the raw image block feature set and on compressed image block features in the compressed image block feature set based on preset feature fusion ways to get the fused feature set.

— S204

The quality of the compressed image blocks is assessed through the preset linear regression function based on the fused feature set, and the corresponding quality score set is thus obtained.

— S205

Based on the quality score set, the preset logistic regression function is adopted to judge whether there is a perceptual distortion between the raw image and the compressed image, and the perceptual distortion discrimination results are

— S206

Fig. 2

| Based on the corresponding compressed image sequences of the set of perceptual distortion discrimination results, the sliding window of preset size slides along the preset sliding direction, and the number of compressed images whose perceptual distortion discrimination results within the sliding window are true values is calculated | ⎯S301 |

| In the case of a sliding direction from right to left, when the number of compressed images is no less than the preset window threshold, the compressed image on the far right of the inner window of the sliding window is judged as JND compressed image; in case of a sliding direction from left to right, when the number of compressed images is not greater than the preset window threshold, the compressed image on the far left of the inner window of the sliding window is judged as JND compressed image. | ⎯S302 |

| The image compression indicator adopted for the JND compressed image is set as the image-level JND threshold of the raw image. | ⎯S303 |

Fig. 3

Fig. 4

Perceptual Distortion
Discrimination Unit — 51

JND Threshold
Prediction Unit — 52

Fig. 5

Fig. 6

Fig. 7